# EUROPEAN PATENT APPLICATION

(11) **EP 2 093 101 A1**
(43) Date of publication of application: **26.08.2009**
(21) Application number: 08151712.0
(22) Date of filing: 20.02.2008
(51) Int. Cl.: B60N 2/00, G01G 19/414, B60R 21/015

(54) **Flexible seat sensor product**

(71) Applicant: IEE INTERNATIONAL ELECTRONICS & ENGINEERING S.A., 6468 Echternach (LU)
(72) Inventor: Goedert, Günter, 54329, Trier (DE); Schmitz, Jean Claude, 8333, Olm (LU); Derieux, Caroline, 57330, Hettange-Grande (FR)
(74) Representative: Office Freylinger

(57) **Abstract**

A flexible seat sensor product (10) comprises a flexible seat sensor (20) and a flexible envelope (30) sheathing said flexible seat sensor. The flexible sensor product has a longitudinal direction and a transverse direction (50). The flexible seat sensor product further comprises fastening elements arranged laterally on both sides of said flexible envelope, said fastening elements comprising at least one fastening zone (60) to be fastened to a structure of said seat. According to the invention, said fastening elements comprise at least one tension strap (70) extending between said at least one fastening zone and said elastic envelope, said tension strap being inclined by an angle of at least 30° with respect to the transverse direction.

## Description

### Technical field

The present invention generally relates to flexible seat sensors to be arranged in a seat and more specifically to flexible seat sensor products including fastening means for attaching the seat sensor to a structure of the seat.

### Background Art

It is well known within the art of automotive vehicles to use passenger detectors in order to detect whether a specific seat of the vehicle is occupied by a passenger. The data collected by these passenger sensors are then used e.g. in the deployment control of secondary restraint systems such as airbags and belt pretensioners, whereupon in case of a crash, the secondary restraint system associated to the specific seat is only deployed if an occupant is present on the seat and/or if the position of the passenger is such that the deployment of the system will not likely result in severe injuries to the passenger. Other applications of the passenger detectors are for instance in safety belt warning devices and the like.

A major part of the passenger sensors used for these applications consist in flexible seat sensors, to be arranged on or in the seat to be monitored. These flexible sensors, which comprise e.g. pressure sensors for detecting a load induced by a passenger into the seat or capacitive proximity sensors, are usually embedded and laminated between two felt layers and the so formed sensor sandwich is to be placed between the seat foam cushion and the trim. In order to be maintained in place, the seat sensors sandwich has to be fastened somehow to the seat structure.

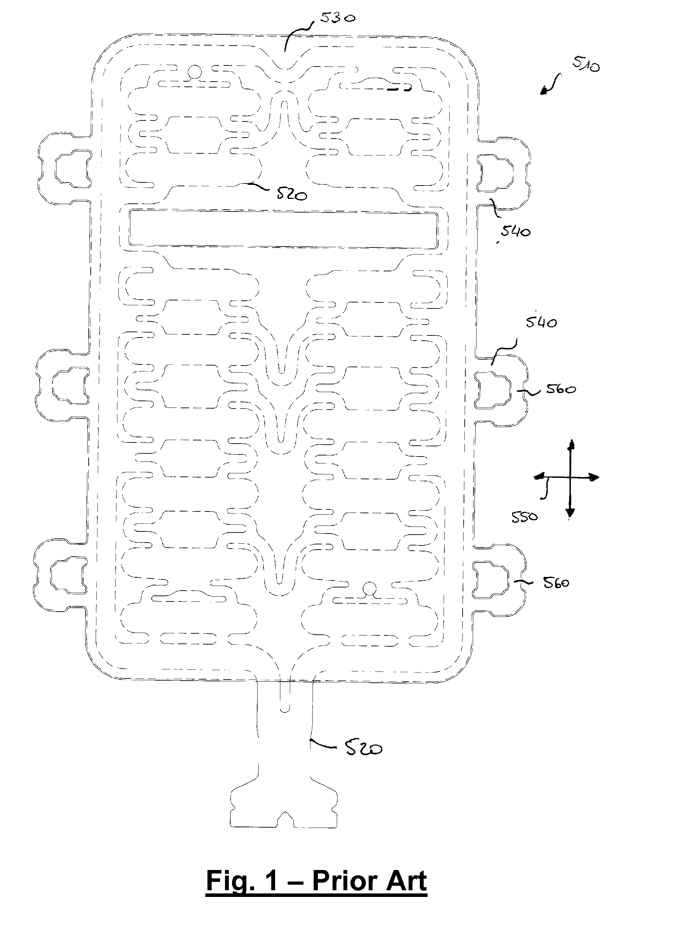

This fastening is usually achieved by means of fastening elements which are formed at the periphery of the sensor sandwich in the felt layers. The fastening elements have the form of U-shaped eyelets, which extend outwardly from the seat sensor (see Fig. 1). In order to fix the sensor product on the seat, the U-shaped eyelets are mechanically secured to a structure of the seat so that the sensor is held into the desired position on the seat A-surface. The bases of the U-shaped eyelets are for instance secured to the existing crimp bars inside the crimp channel at the periphery of the seating surface, between the main seating cushion and the side bolsters of the seat. These crimp bars are normally used in the seat for securing the seat trim onto the seat cushion.

Due to the flexibility of the sensor product and the seat, this type of fastening of the sensor exhibits some drawbacks. In fact, due to the loading conditions on the seat during ingress and egress (especially if a person kneels on the seat), the seat sensor is deformed and slightly displaced e.g. in the longitudinal direction by the load acting on the seat. Due to the fixation with the U-shaped eyelets, such displacement is not entirely prevented or at least reversed after that specific loading condition has stopped. As this behaviour is repeated countless times during the lifetime of the seat, the flexible sensor may therefore develop folds and wrinkles in response to this displacement. These deformation patterns may however lead to a damage of the sensor. For instance, if a subsequent deformation (e.g. knee-in) takes place, kinks may develop from the folds, which imply a severe lifetime reduction of the sensor system e.g. due to conductor line break or the like.

Hence there is a need for a seat sensor system, which enables improved fastening of the sensor system to the seat structure.

### Technical problem

It is therefore an object of the present invention to provide such an improved seat sensor product.

### General Description of the Invention

In order to overcome the above-mentioned problem, the present invention proposes a seat sensor product comprising improved fastening elements. A flexible seat sensor product comprises a flexible seat sensor and a flexible envelope sheathing said flexible seat sensor. The flexible sensor product has a longitudinal direction and a transverse direction. The flexible seat sensor product further comprises fastening elements arranged laterally on both sides of said flexible envelope, said fastening elements comprising at least one fastening zone to be fastened to a structure of said seat. According to the invention, said fastening elements comprise at least one tension strap extending between said at least one fastening zone and said elastic envelope, said tension strap being inclined by an angle of at least ±30° with respect to the transverse direction.

In the sensor according to the present invention the tension straps, which extend between the fastening zone and the flexible sensor envelope are not perpendicular to the longitudinal direction of the seat sensor as are the U-shaped eyelets according to the prior art. Due to the orientation at an angle of at least ±30° with respect to the transverse direction, the tension straps are better oriented for receiving the tensile forces, which act in the case of a deformation of the sensor in the longitudinal direction. The tension straps may therefore better react against these tensile forces as their principal fixing direction is better adapted to the main loading direction. Hence the tension straps ensure a better positioning of the sensor in the main loading directions and thus may avoid permanent deformation of the sensor.

According to the invention, the tension straps are oriented at an angle of at least ±30° with respect to the transverse direction of the sensor. It will be appreciated, that the tension straps are all the more effective, the better their orientation matches with the direction of the load induced into the system. As in the case of a vehicle seat, a large part of the loading conditions occur in the longitudinal direction of the seat sensor, it is preferable to set the angle between the straps and the transversal direction to a value larger than 45°. The angle may be adapted to the loading conditions which are expected to occur for the specific sensor/seat configuration. If lateral as well as longitudinal loading may be expected, an angle of 45° seems to be the best choice. If however longitudinal loading is expected to be dominant, the angle should be increased even more, e.g. to 60°.

In a preferred embodiment of the invention, the said fastening elements comprise two tension straps per fastening zone, one of said two tension straps being arranged on either side of said fastening zone and extending at an angle of at least ±30° with respect to said transverse direction. In this embodiment, the sensor product preferably comprises at least two tension straps per fastening zone, one oriented at a first angle α with respect to the transverse direction and one oriented at a second angle -β with respect to the transverse direction, wherein α≥30° and β≥30°. In this case, one of the tension straps is suitably oriented for receiving the load forcers urging the sensor towards the rear of the seat and one strap is suitably oriented for receiving the load forcers urging the sensor towards the front of the seat. It will be noted, that as the loading conditions may be different in forward direction and in rearward direction, the angles α and β need not necessarily to be identical. If for instance the loads acting in rearward direction are higher than those expected in forward direction, the straps oriented for receiving the rearward acting loads may be inclined more with respect to the transverse direction, than those straps oriented for receiving the forward acting loads. As a side effect of such specific orientation, the latter straps are better oriented to receive loads acting in the transverse direction.

It will be noted, that in this embodiment of the invention, the arrangement is such that the tension straps form together with the border of the envelope a triangular or a trapezoidal eyelet, wherein the border of the envelope forms the base of the triangle of trapezoid. If the orientation angles of the two straps are not equal for both tension straps, the eyelets might have the form of a saw tooth. If the angles are equal (in absolute value) the arrangement forms V-shaped eyelets arranged on said envelope, wherein the base of said V-shaped eyelets forms the fastening zone of the fastening element and wherein the legs of said V-shaped eyelets form two tension straps arranged at an angle of at least ±30° with respect to said transverse direction.

In another embodiment of the invention, the fastening elements comprise a flap extending on either side of said envelope, each said flap having said at least one fastening zone formed therein. Furthermore said flap comprises a plurality of incisions formed therein, said incisions extending in parallel within said flap and at an angle of at least ±30° with respect to said transverse direction so as to form said tension straps between adjacent incisions. The flap may extend along the entire length of the sensor envelope or only along a part of said length. As described above with the first embodiment, the orientation of the incisions and accordingly the orientation of the tension straps may be adapted to the specific load conditions to be expected.

It should be noted, that in order to achieve the best protection against bending and folding of the sensor, the tension straps should be as dense as possible. In fact, depending on the load conditions acting on the seat, folds of the sensor may still occur between the points of attachment of the tension straps on the sensor envelope, i.e. between the effective fixation points. It follows that the fixation is most effective the closer the fastening strips are arranged together.

In a preferred variant of this embodiment, said flap comprises a multilayered configuration with at least a first layer and a second layer arranged one above the other. In this case, the first layer preferably comprises a first group of incisions extending in a first direction so that a first group of tensions straps are formed between adjacent incisions of said first group of incisions, said first group of tension straps extending in said first direction in said first layer, said first direction being inclined by angle of at least +30° with respect to said transverse direction; and the second layer comprises a second group of incisions extending in a second direction so that a second group of tensions straps are formed between adjacent incisions of said second group of incisions, said second group of tension straps extending in said second direction in said first layer, said second direction being inclined by angle of at least -30° with respect to said transverse direction.

In this embodiment, the fastening elements comprises a first layer with tension straps oriented at a first angle α with respect to the transverse direction and a second layer with tension straps oriented at a second angle -β with respect to the transverse direction, wherein α≥30° and β≥30°. This means that the tension straps of one layer are suitably oriented for receiving the load forces urging the sensor towards the rear of the seat and the tension straps of the other layer suitably oriented for receiving the load forcers urging the sensor towards the front of the seat. It will be noted, that as the loading conditions may be different in forward direction and in rearward direction, the angles α and β need not necessarily to be identical.

It will be appreciated, that the arrangement of the differently oriented straps on different layers of the fastening elements enables to increase the number of tension straps per length. In fact, as all the tension straps of one layer are oriented in parallel, the different tension straps do not need to be spaced from one another, so that the entire length of the flaps may effectively receive the loads acting onto the sensor. As a result deformation of the sensor can be effectively prevented on its entire length.

It will be noted that the first and second layer may be adhered together at a borderline of said flap and/or on dedicated points located within said flaps or on their entire surface. Furthermore, said fastening elements are preferably integrally formed onto said envelope. The envelope of the sensor usually consists of two layers of felt material, between which the sensor is arranged, and which hare laminated together. The flaps are then preferably formed by side areas of the felt layers. The incisions into the side areas are made prior to the lamination of the sensor product. Likewise, the V-shaped tension straps of the first embodiment are preferably integrally formed by side areas of the felt layers.

It will finally be noted that the present invention is applicable to all kind os seat sensors to be arranged on the A-surface of a seat. Accordingly the flexible seat sensor may e.g. comprise a foil-type pressure sensor and/or a capacitive proximity sensor.

### Brief Description of the Drawings

Preferred embodiments of the invention will now be described, by way of example, with reference to the accompanying drawings in which:
Fig. 1 is a plan view of a seat sensor product according to the prior art;
Fig. 2 is a plan view of a first embodiment of a seat sensor according to the present invention;
Fig. 3 is a plan view of a first embodiment of a seat sensor according to the present invention.

### Description of Preferred Embodiments

Fig. 1 shows a prior art seat sensor product 510. The sensor product 510 comprises a seat sensor 520, which is represented in dashed lines inside of a felt pocket 530. The felt pocket 530 consists of two layers of felt material, between which the sensor 520 is laminated. As shown in Fig. 1, the felt pocket 530 comprises on either side a number of U-shaped eyelets 540 arranged laterally from the sensor 520. The U-shaped eyelets 540 extend in transverse direction 550 of the sensor product 510. The basis of the U-shaped eyelets forms the fastening zone 560, by which the sensor product is to be connected to the seat structure.

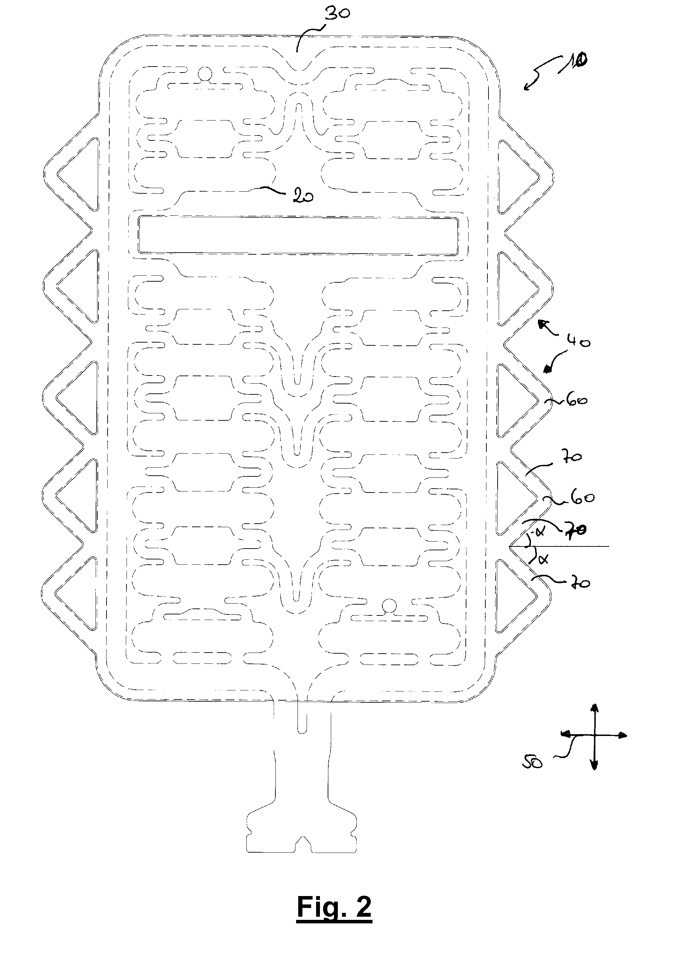

Fig. 2 is a plan view of a first embodiment of a seat sensor product 10 according to the present invention. As for the prior art product, the sensor product 10 comprises a seat sensor 20, which is represented in dashed lines inside of a felt pocket 30. The felt pocket 30 consists of two layers of felt material, between which the sensor 20 is laminated. On either side of the sensor 20, the felt pocket comprises a number of V-shaped eyelets 40, which form the fastening zone 60 at the base of the V. the two legs of the V-shape form tension straps 70, which are inclined by an angle α of at least ±30° with respect to the transverse direction 50. In the shown embodiment, the angle α is 45°, so that one tension strap 70 associated to a fastening zone 60 is inclined by -45° and the other tension strap 70 associated to the same fastening zone 60 is inclined by 45° with respect to the transverse direction.

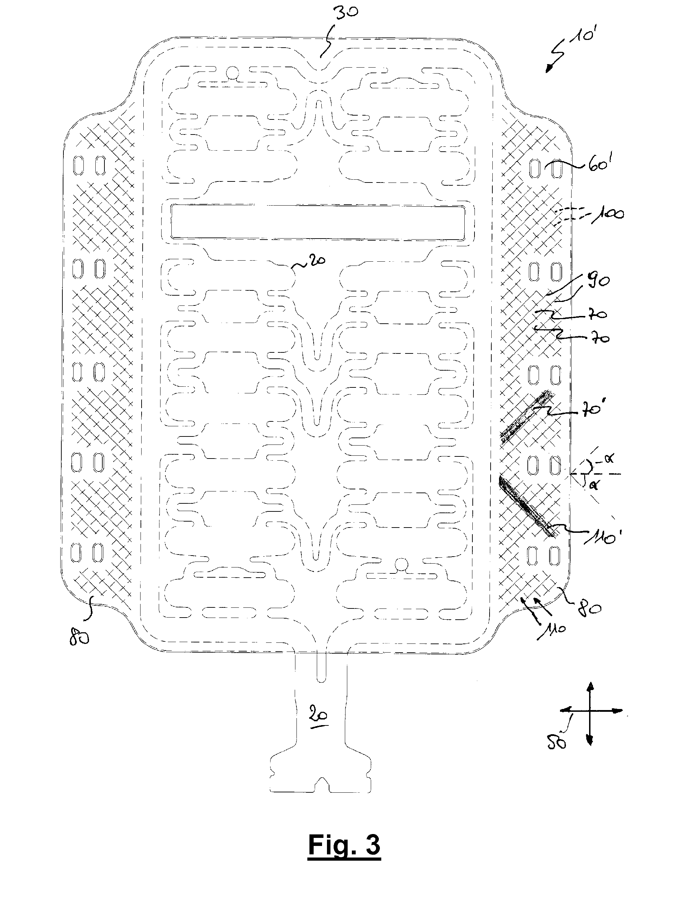

Fig. 3 is a plan view of a second embodiment of a seat sensor product 10 according to the present invention. In this embodiment, the fastening zones 60' are formed in flaps 80 arranged on either side of the sensor 20. The flaps 80 are provided with a number of incisions, which extending substantially in parallel within said flap 80. In the shown embodiment, the incisions 90 of the upper felt layer (represented in continuous lines) are represented to be inclined by an angle of -α with respect to the transverse direction, while the incisions 100 of the lower felt layer (represented in dashed lines) are represented to be inclined by an angle of +α with respect to the transverse direction. According to the invention, the angel α is chosen to be larger than or equal to 30°. In the shown embodiment, the angle α is 45°.

The incisions 90 of the upper felt layer form between them a number of tension straps 70, which are inclined by angle -α with respect to the transverse direction 50. For illustrational purposes, one of these tensions straps is represented in grey at 70'. Likewise, the incisions 100 of the lower felt layer form between them a number of tension straps 110, which are inclined by angle +α with respect to the transverse direction 50. For illustrational purposes, one of these tensions straps is represented in grey at 110'.

## Claims

1. A flexible seat sensor product, comprising a flexible seat sensor and a flexible envelope sheathing said flexible seat sensor, said flexible sensor product having a longitudinal direction and a transverse direction, said flexible seat sensor product further comprising fastening elements arranged laterally on both sides of said flexible envelope, said fastening elements comprising at least one fastening zone to be fastened to a structure of said seat,
**characterized in that**
said fastening elements comprise at least one tension strap extending between said at least one fastening zone and said elastic envelope, said tension strap being inclined by an angle of at least ±30° with respect to said
transverse direction.

2. The flexible seat sensor product as claimed in claim 1, wherein said fastening elements comprise two tension straps per fastening zone, one of said two tension straps being arranged on either side of said fastening zone and extending at an angle of at least ±30° with respect to said transverse direction.

3. The flexible seat sensor product as claimed in claim 1, wherein said fastening elements comprise a flap extending on either side of said envelope, each said flap having said at least one fastening zone formed therein, and said flap comprising a plurality of incisions formed therein, said incisions extending in parallel within said flap and at an angle of at least ±30° with respect to said transverse direction so as to form said tension straps between adjacent incisions.

4. The flexible seat sensor product as claimed in claim 3, wherein said flap comprises a multilayered configuration with at least a first layer and a second layer arranged one above the other,
wherein the first layer comprises a first group of incisions extending in a first direction so that a first group of tensions straps are formed between adjacent incisions of said first group of incisions, said first group of tension straps extending in said first direction in said first layer, said first direction being inclined by angle of at least +30° with respect to said transverse direction; and wherein the second layer comprises a second group of incisions extending in a second direction so that a second group of tensions straps are formed between adjacent incisions of said second group of incisions, said second group of tension straps extending in said second direction in said first layer, said second direction being inclined by angle of at least -30° with respect to
said transverse direction.

5. The flexible seat sensor product as claimed in claim 4, wherein said first and second layer are adhered together at a borderline of said flap.

6. The flexible seat sensor product as claimed in any one of claims 4 or 5, wherein said first and second layer are adhered together on dedicated points located within said flaps.

7. The flexible seat sensor product as claimed in any one of claims 4 to 6, wherein said first and second layer are adhered together on their entire surface.

8. The flexible seat sensor product as claimed in any one of claims 1 to 7, wherein said fastening elements are integrally formed onto said envelope.

9. The flexible seat sensor product as claimed in any one of claims 1 to 8, wherein said flexible envelope and said fastening elements are made of a felt material.

10. The flexible seat sensor product as claimed in any one of claims 1 to 9, wherein flexible seat sensor comprises a pressure sensor and/or a capacitive proximity sensor.
